# EUROPEAN PATENT APPLICATION

(11) **EP 4 667 529 A1**
(43) Date of publication of application: **24.12.2025**
(21) Application number: 24756645.8
(22) Date of filing: 30.01.2024
(51) Int. Cl.: C08L 67/04

(54) **POLY(3-HYDROXYALKANOATE)-BASED RESIN COMPOSITION FOR FORMING PROCESS AND FORMED BODY THEREOF**

(30) Priority: 17.02.2023 JP 2023023199
(71) Applicant: Kaneka Corporation, Osaka-shi, Osaka 530-8288 (JP)
(72) Inventor: SUNAGAWA, Takenobu, Osaka 566-0072 (JP)
(74) Representative: Vossius & Partner Patentanwälte Rechtsanwälte mbB
(86) International application number: PCT/JP2024/002840
(87) International publication number: WO 2024/171794

(57) **Abstract**

A poly(3-hydroxyalkanoate) resin composition for molding contains a poly(3-hydroxyalkanoate) copolymer (A) having a weight-average molecular weight of 10 × 10⁴ to 100 × 10⁴ and a poly(3-hydroxybutyrate) resin (C) having a weight-average molecular weight of 16 × 10⁴ to 50 × 10⁴. The amount of the resin (C) is from more than 5 to 50 parts by weight per 100 parts by weight of the copolymer (A).

## Description

### Technical Field

The present invention relates to a poly(3-hydroxyalkanoate) resin composition for molding and a molded article of the poly(3-hydroxyalkanoate) resin composition.

### Background Art

In recent years, waste plastics have caused an adverse impact on the global environment, for example, by affecting ecosystems, emitting hazardous gases during combustion, or generating a huge amount of combustion heat which contributes to global warming. As materials that can be a solution to this problem, biodegradable plastics are under active development.

Biodegradable plastics, in particular aliphatic polyester resins, that are microbially produced using a plant-derived material as a carbon source are attracting attention in terms of biodegradability and carbon neutrality. Among the aliphatic polyester resins, poly(3-hydroxyalkanoate) resins such as poly(3-hydroxybutyrate) homopolymer resin, poly(3-hydroxybutyrate-co-3-hydroxyvalerate) copolymer resin, poly(3-hydroxybutyrate-co-3-hydroxyhexanoate) copolymer resin, and poly(3-hydroxybutyrate-co-4-hydroxybutyrate) copolymer resin are the focus of attention.

In general, the poly(3-hydroxyalkanoate) resins, in particular poly(3-hydroxyalkanoate) copolymer resins, are characterized by a slow crystallization speed, due to which these resins are poorly processable in melt molding.

In the context of this problem, Patent Literature 1 discloses a poly(3-hydroxyalkanoate) resin composition containing first and second poly(3-hydroxyalkanoate) resins. The melting point of the second polyhydroxyalkanoate as measured in the composition is lower than that as measured for the second polyhydroxyalkanoate alone.

Patent Literature 2 discloses a polyester resin composition containing a polyhydroxyalkanoate and a low-melting-point polyhydroxybutyrate. The low-melting-point polyhydroxybutyrate has a weight-average molecular weight of 5,000 to 50,000.

### Citation List

### Patent Literature

PTL 1: WO 2015/146194 A1
PTL 2: Japanese Laid-Open Patent Application Publication No. 2014-227543

### Summary of Invention

### Technical Problem

The compositions described in Patent Literatures 1 and 2 can exhibit accelerated crystallization of the poly(3-hydroxyalkanoate) resins. However, the acceleration of crystallization is still unsatisfactory, and there is a need for further improvement.

Actual molding is governed by shear flow. Under shear flow, the resin molecular chain is oriented, and this molecular chain orientation can act to accelerate the crystallization. It is thus desired that the crystallization speed be evaluated under conditions reflecting actual molding as accurately as possible.

In view of the above circumstances, the present invention aims to provide a poly(3-hydroxyalkanoate) resin composition for molding that crystallizes at an increased crystallization speed after being exposed to shear and a molded article of the poly(3-hydroxyalkanoate) resin composition.

The present inventors evaluated the crystallization speed and crystal morphology of resins by means of a device capable of examining crystallization that the resins undergo after being heated and melted and exposed to shear, and focused on finding a resin composition that can achieve significantly accelerated crystallization under the evaluation conditions.

### Solution to Problem

As a result of intensive studies with the goal of solving the above problem, the present inventors have found that when 100 parts by weight of a poly(3-hydroxyalkanoate) copolymer having a weight-average molecular weight of 10 × 10⁴ to 100 × 10⁴ is blended with more than 5 to 50 parts by weight of a poly(3-hydroxybutyrate) resin having a weight-average molecular weight of 16 × 10⁴ to 50 × 10⁴, the blend crystallizes in an accelerated fashion after being exposed to shear even in case that the blend is heated to or above 185°C at which the poly(3-hydroxybutyrate) resin completely melts. Based on this finding, the inventors have completed the present invention.

Specifically, the present invention relates to a poly(3-hydroxyalkanoate) resin composition for molding, containing:
a poly(3-hydroxyalkanoate) copolymer (A) having a weight-average molecular weight of 10 × 10⁴ to 100 × 10⁴; and
a poly(3-hydroxybutyrate) resin (C) having a weight-average molecular weight of 16 × 10⁴ to 50 × 10⁴, wherein
the term "weight-average molecular weight" as used herein refers to a polystyrene-equivalent weight-average molecular weight determined by gel permeation chromatography using a chloroform solvent, and
an amount of the poly(3-hydroxybutyrate) resin (C) is from more than 5 to 50 parts by weight per 100 parts by weight of the poly(3-hydroxyalkanoate) copolymer (A).

The present invention also relates to a molded article containing the poly(3-hydroxyalkanoate) resin composition for molding.

The present invention further relates to a method for producing a molded article, the method including the step of subjecting the poly(3-hydroxyalkanoate) resin composition for molding to melt molding under shear flow at a shear rate of 10 sec⁻¹ or more.

### Advantageous Effects of Invention

The present invention can provide a poly(3-hydroxyalkanoate) resin composition for molding that crystallizes at an increased crystallization speed after being exposed to shear and a molded article of the poly(3-hydroxyalkanoate) resin composition.

According to the present invention, since the poly(3-hydroxyalkanoate) resin composition crystallizes at an increased crystallization speed after being exposed to shear, melt molding using the resin composition can be stably performed at high productivity under practical processing conditions.

In addition, the torque during kneading of the poly(3-hydroxyalkanoate) resin composition can be kept to a relatively low level, and this can reduce the amount of heat generated by the kneading and prevent the thermal decomposition of the poly(3-hydroxyalkanoate) resins during the kneading.

Furthermore, a molded article formed from the poly(3-hydroxyalkanoate) resin composition can have a good appearance with reduced formation of foreign substances.

According to a preferred aspect of the present invention, a wide range of temperature conditions can be employed in molding including the process of melting a molding material containing poly(3-hydroxyalkanoate) resins and cooling and solidifying the molding material. Thus, the molding can be performed stably, and a molded article can be produced which has a relatively uniform thickness or weight and which has a good appearance. Furthermore, the productivity can be improved to allow for high-speed mass production of the molded article.

### Brief Description of Drawings

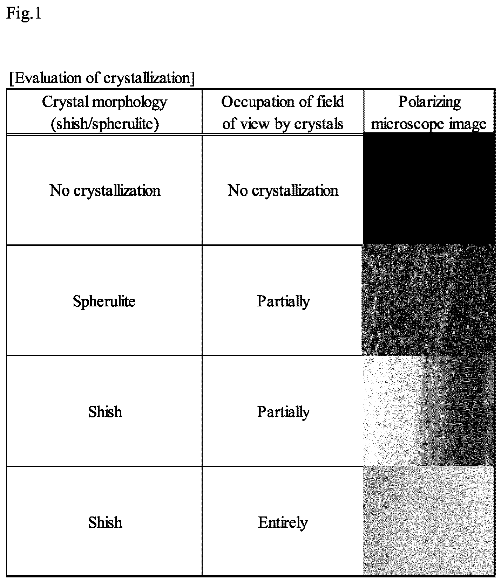

FIG. 1 shows examples of polarizing microscope images showing the crystal morphology observed in Examples or Comparative Examples and illustrates how to evaluate the morphology.

### Description of Embodiments

Hereinafter, an embodiment of the present invention will be described. The present invention is not limited to the embodiment described below.

A resin composition according to the present embodiment is a resin composition composed mainly of a poly(3-hydroxyalkanoate) copolymer and used to form a molded article through heating and melting followed by cooling and solidification. In particular, exposing the resin composition to shear during the heating and melting accelerates the crystallization of the resin composition, leading to an improvement in molded article productivity.

The resin composition according to the present embodiment is a poly(3-hydroxyalkanoate) resin composition containing at least a poly(3-hydroxyalkanoate) copolymer (A) having a weight-average molecular weight of 10 × 10⁴ to 100 × 10⁴ and a poly(3-hydroxybutyrate) resin (C) having a weight-average molecular weight of 16 × 10⁴ to 50 × 10⁴.

### <Poly(3-Hydroxyalkanoate) Copolymer (A)>

The poly(3-hydroxyalkanoate) copolymer (A) is a biodegradable aliphatic polyester (preferably a polyester containing no aromatic ring) and a copolymer containing at least one type of 3-hydroxyalkanoate units or two or more types of 3-hydroxyalkanoate units. In this application, poly(3-hydroxyalkanoate) copolymers are also referred to as P3HAs.

The 3-hydroxyalkanoate units are preferably represented by the following formula (1).

[-CHR-CH₂-CO-O-] (1)

In the formula (1), R is an alkyl group represented by CₚH₂ₚ₊₁, and p is an integer from 1 to 15. Examples of R include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The poly(3-hydroxyalkanoate) copolymer (A) is particularly preferably a microbially produced poly(3-hydroxyalkanoate) copolymer. In the microbially produced poly(3-hydroxyalkanoate) copolymer, all of the 3-hydroxyalkanoate units are contained as (R)-3-hydroxyalkanoate units.

The poly(3-hydroxyalkanoate) copolymer (A) preferably contains 50 mol% or more, more preferably 60 mol% or more, even more preferably 70 mol% or more, of 3-hydroxyalkanoate units (in particular, the units represented by the formula (1)) in the total structural units (monomer units). The poly(3-hydroxyalkanoate) copolymer may contain only two or more types of 3-hydroxyalkanoate units as polymer structural units or may contain other units (such as 4-hydroxyalkanoate structural units) in addition to one type or two or more types of 3-hydroxyalkanoate units.

The poly(3-hydroxyalkanoate) copolymer (A) is preferably a copolymer containing 3-hydroxybutyrate (hereinafter also referred to as 3HB) units and other hydroxyalkanoate units. Preferably, all of the 3-hydroxybutyrate units are (R)-3-hydroxybutyrate units.

The other hydroxyalkanoate units may be 3-hydroxyalkanoate units other than 3HB units or may be hydroxyalkanoate units (such as 4-hydroxyalkanoate units) other than 3-hydroxyalkanoate units. The other hydroxyalkanoate units may include only one type of hydroxyalkanoate units or may include two or more types of hydroxyalkanoate units.

Specific examples of the poly(3-hydroxyalkanoate) copolymer (A) include poly(3-hydroxybutyrate-co-3-hydroxypropionate), poly(3-hydroxybutyrate-co-3-hydroxyvalerate) abbreviated as P3HB3HV, poly(3-hydroxybutyrate-co-3-hydroxyvalerate-3-hydroxyhexanoate), poly(3-hydroxybutyrate-co-3-hydroxyhexanoate) abbreviated as P3HB3HH, poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as P3HB4HB. In particular, P3HB3HH or P3HB4HB is preferred in terms of, for example, the resin composition productivity and the mechanical properties of the resin composition. Particularly preferred is P3HB3HH.

P3HAs can be microbially produced. Such a microbially produced P3HA is typically a P3HA consisting only of *D-* (*R*-) hydroxyalkanoic acid repeating units. Among microbially produced P3HAs, P3HB3HH, P3HB3HV, P3HB3HV3HH, and P3HB4HB are preferred since they are easy to industrially produce. P3HB3HH, P3HB3HV, and P3HB4HB are more preferred and P3HB3HH is particularly preferred. One P3HA may be used alone, or two or more P3HAs differing in the types or proportions of monomers may be used in combination.

The P3HA-producing microorganism is not limited to a particular type and may be any microorganism having a P3HA-producing ability. The first example of P3HB-producing bacteria is *Bacillus megaterium* discovered in 1925, and other known examples include naturally occurring microorganisms such as *Cupriavidus necator* (formerly classified as *Alcaligenes eutrophus* or *Ralstonia eutropha)* and *Alcaligenes latus.* These microorganisms accumulate P3HB in their cells.

Known examples of bacteria that produce copolymers of 3HB with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) having a P3HA synthase gene introduced is preferred. Such a microorganism is cultured under suitable conditions to allow the microorganism to accumulate a P3HA in its cells, and the microbial cells accumulating the P3HA are used. Instead of the above microorganisms, a genetically modified microorganism having any suitable P3HA synthesis-related gene introduced may be used depending on the P3HA to be produced. The culture conditions including the type of the substrate may be optimized depending on the P3HA to be produced.

The weight-average molecular weight of the poly(3-hydroxyalkanoate) copolymer (A) is from 10 × 10⁴ to 100 × 10⁴. The fact that the weight-average molecular weight of the P3HA (A) is 10 × 10⁴ or more allows for formation of a molded article having good physical properties through melting followed by cooling. In addition, the use of such a P3HA (A) in combination with the poly(3-hydroxybutyrate) resin (C) described later allows the resin composition to crystallize in an accelerated fashion after being melted and exposed to shear, making it possible to produce a molded article at high productivity. Controlling the weight-average molecular weight of the P3HA (A) to 100 × 10⁴ or less further improves the processability of the resin composition, making the molding easier. The weight-average molecular weight of the P3HA (A) is preferably from 20 × 10⁴ to 80 × 10⁴. The weight-average molecular weight may be more than 20 × 10⁴. The weight-average molecular weight is more preferably from 25 × 10⁴ to 70 × 10⁴ and even more preferably from 30 × 10⁴ to 60 × 10⁴.

The weight-average molecular weight of a P3HA can be determined as a polystyrene-equivalent molecular weight measured by gel permeation chromatography (GPC; "High-performance liquid chromatograph 20A system" manufactured by Shimadzu Corporation) using polystyrene gels ("K-G 4A" and "K-806M" manufactured by Showa Denko K.K.) as columns and chloroform as a mobile phase. In this GPC, calibration curves are created using polystyrenes having weight-average molecular weights of 31,400, 197,000, 668,000, and 1,920,000. The columns used in the GPC may be any columns suitable for measurement of the molecular weight.

The poly(3-hydroxyalkanoate) copolymer (A) is preferably a copolymer that contains 3-hydroxybutyrate units and other hydroxyalkanoate units and in which the proportion of the other hydroxyalkanoate units is from 1 to 23 mol%. When the proportion of the other hydroxyalkanoate units is in this range, the poly(3-hydroxyalkanoate) resin composition can have a good balance of flexibility and stiffness, and the productivity can be improved. The proportion is more preferably from 1 to 20 mol%, even more preferably from 1 to 15 mol%, and particularly preferably from 1 to 10 mol%. The proportion may be at least 2 mol% or at least 3 mol%.

The proportion of the other hydroxyalkanoate units refers to the molar proportion of those monomer units in the total monomer units constituting the P3HA (A). In the case where the P3HA (A) is a mixture of two or more P3HAs, the proportion of the other hydroxyalkanoate units refers to the molar proportion of those monomer units contained in the total mixture.

The monomer proportions in a P3HA can be measured by a method such as gas chromatography. For example, WO 2014/020838 A1 can be used as a reference for the measurement.

### <Poly(3-Hydroxybutyrate) Resin (C)>

The poly(3-hydroxyalkanoate) resin composition for molding according to the present embodiment further contains a poly(3-hydroxybutyrate) resin (C). The resin (C) more readily crystallizes than poly(3-hydroxyalkanoate) copolymers. In addition, the molecular chain of the resin (C) is easily oriented under melt shearing, and this orientation induces crystallization. Thus, even when the resin composition is heated to or above 185°C at which the resin (C) completely melts, exposing the resin composition to shear can accelerate the crystallization of the resin composition. The use of the resin (C) accelerates crystallization following exposure to shear, making it possible to produce a molded article at high productivity.

The poly(3-hydroxybutyrate) resin (C) refers to a homopolymer of 3-hydroxybutyrate or a polymer containing 3-hydroxybutyrate units and a small amount of hydroxyalkanoate units other than 3-hydroxybutyrate units. To be specific, the poly(3-hydroxybutyrate) resin (C) preferably contains more than 99 mol% to 100 mol% of 3-hydroxybutyrate units in the total constituent monomer units.

Those hydroxyalkanoate units other than 3-hydroxybutyrate units which may be contained in the poly(3-hydroxybutyrate) resin (C) are not limited to a particular type and may be any hydroxyalkanoate units copolymerizable with 3-hydroxybutyrate units. Examples of the other hydroxyalkanoate units include 3-hydroxyalkanoate units other than 3-hydroxybutyrate units and hydroxyalkanoate units (such as 4-hydroxyalkanoate units) other than 3-hydroxyalkanoate units. In particular, 3-hydroxyhexanoate units are preferred.

The weight-average molecular weight of the poly(3-hydroxybutyrate) resin (C) is from 16 × 10⁴ to 50 × 10⁴. Having a weight-average molecular weight of 16 × 10⁴ or more, the resin (C) is easily oriented under melt shearing, and this orientation induces crystallization. Thus, melting and exposure to shear accelerates the crystallization of the resin composition, making it possible to produce a molded article at high productivity. Controlling the weight-average molecular weight of the resin (C) to 50 × 10⁴ or less reduces the formation of foreign substances in the molded article. In addition, controlling the weight-average molecular weight of the resin (C) to 50 × 10⁴ or less further improves the processability of the resin composition and makes the molding easier. The weight-average molecular weight of the resin (C) is preferably from 18 × 10⁴ to 48 × 10⁴, more preferably from 20 × 10⁴ to 45 × 10⁴, and particularly preferably from 25 × 10⁴ to 40 × 10⁴.

In terms of keeping the torque during kneading to a relatively low level, the weight-average molecular weight of the resin (C) is preferably lower than the weight-average molecular weight of the P3HA (A) and more preferably at least 10 × 10⁴, even more preferably at least 15 × 10⁴, lower than the weight-average molecular weight of the P3HA (A).

The amount of the poly(3-hydroxybutyrate) resin (C) is set in the range of more than 5 to 50 parts by weight per 100 parts by weight of the P3HA (A). When the amount of the poly(3-hydroxybutyrate) resin (C) is in this range, crystallization following exposure to shear is accelerated, and a molded article can be produced at high productivity. If the amount of the resin (C) is 5 parts by weight or less, the use of the poly(3-hydroxybutyrate) resin (C) is likely to fail to provide the crystallization-accelerating effect. In addition, the torque during kneading increases, so that an undesirably large amount of heat is generated to increase the likelihood of thermal decomposition of the poly(3-hydroxyalkanoate) resins. If the amount of the poly(3-hydroxybutyrate) resin (C) is more than 50 parts by weight, foreign substances are likely to occur in the molded article. The amount of the resin (C) is preferably at least 7 parts by weight, more preferably at least 8 parts by weight, and even more preferably at least 10 parts by weight. The amount of the resin (C) may be more than 10 parts by weight and may be 15 parts by weight or more. The amount of the resin (C) is preferably up to 40 parts by weight, more preferably up to 30 parts by weight, and particularly preferably up to 20 parts by weight.

The poly(3-hydroxyalkanoate) resin composition for molding according to the present embodiment is an unfoamed resin composition unlike foamed resin particles as disclosed in WO 2019/146555 A1 or WO 2022/054870 A1 and is preferably a resin composition substantially free of internal bubbles.

Since the poly(3-hydroxyalkanoate) resin composition for molding according to the present embodiment is not foamed, the poly(3-hydroxyalkanoate) resin composition has a relatively high density. The density is preferably more than 0.3 g/cm³, more preferably 0.5 g/cm³ or more, and even more preferably 0.7 g/cm³ or more. The upper limit of the density is not limited to a particular value. For example, the density may be up to 1.6 g/cm³ or up to 1.4 g/cm³. The density of the resin composition can be determined by a method as described in JIS K 0061 (Test methods for density and relative density of chemical products) or a method as described in JIS Z 8807 (Methods of measuring density and specific gravity of solid).

The poly(3-hydroxyalkanoate) resin composition for molding according to the present embodiment may optionally contain, in addition to the P3HA (A) and the poly(3-hydroxybutyrate) resin (C), at least one component selected from the group consisting of an additional resin, a nucleating agent, and a lubricant.

### <Additional Resin>

The poly(3-hydroxyalkanoate) resin composition for molding may contain an additional resin which corresponds to neither the P3HA (A) nor the poly(3-hydroxybutyrate) resin (C). The additional resin is not limited to a particular type but preferably a resin that does not significantly deteriorate the compatibility or moldability in molding of the poly(3-hydroxyalkanoate) resin composition for molding or the mechanical properties of the resulting molded article. When the resulting molded article is used in an application that requires biodegradability, the additional resin is preferably a biodegradable resin.

Examples of the additional resin include: an aliphatic polyester having a structure formed by polycondensation of an aliphatic diol and an aliphatic dicarboxylic acid; and an aliphatic-aromatic polyester formed using both an aliphatic compound and an aromatic compound as monomers. Examples of the aliphatic polyester include polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the aliphatic-aromatic polyester include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST). One such additional resin may be used alone, or two or more such additional resins may be used in combination.

When the poly(3-hydroxyalkanoate) resin composition for molding contains the additional resin, the amount of the additional resin is preferably 250 parts by weight or less, more preferably 100 parts by weight or less, even more preferably 50 parts by weight or less, and particularly preferably 20 parts by weight or less per 100 parts by weight of the total amount of the P3HA (A) and the poly(3-hydroxybutyrate) resin (C). The amount of the additional resin may be 10 parts by weight or less, 5 parts by weight or less, or 1 part by weight or less. The lower limit of the amount of the additional resin is not limited to a particular value, and the amount of the additional resin may be 0 part by weight.

### <Nucleating Agent>

The poly(3-hydroxyalkanoate) resin composition for molding may further contain a nucleating agent. When the poly(3-hydroxyalkanoate) resin composition for molding contains a nucleating agent, the crystallization of the resin components can be further accelerated to increase the molding speed, the productivity, etc.

The nucleating agent is not limited to a particular type and may be a conventionally known nucleating agent. Examples include: pentaerythritol; inorganic substances such as boron nitride, titanium oxide, talc, layered silicate, calcium carbonate, sodium chloride, and metal phosphates; naturally occurring sugar alcohol compounds such as erythritol, galactitol, mannitol, and arabitol; polyvinyl alcohol; chitin; chitosan; polyethylene oxide; amides of aliphatic carboxylic acids; salts of aliphatic carboxylic acids; aliphatic alcohols; esters of aliphatic carboxylic acids; dicarboxylic acid derivatives such as dimethyl adipate, dibutyl adipate, diisodecyl adipate, and dibutyl sebacate; cyclic compounds such as indigo, quinacridone, and quinacridone magenta which have in their molecule a functional group C=O and a functional group selected from NH, S, and O; sorbitol derivatives such as bis(benzylidene) sorbitol and bis(p-methylbenzylidene) sorbitol; compounds such as pyridine, triazine, and imidazole which contain a nitrogen-containing heteroaromatic core; phosphoric ester compounds; bisamides of higher fatty acids; and metal salts of higher fatty acids. One of these nucleating agents may be used alone, or two or more thereof may be used in combination.

The amount of the nucleating agent is not limited to a particular range and may be any amount as long as the nucleating agent can accelerate the crystallization of the resin components. The amount of the nucleating agent is preferably from 0.05 to 12 parts by weight, more preferably from 0.1 to 10 parts by weight, and even more preferably from 0.5 to 8 parts by weight per 100 parts by weight of the total amount of the P3HA (A) and the poly(3-hydroxybutyrate) resin (C). When the amount of the nucleating agent is in the above range, the effect of the nucleating agent can be obtained while minimizing a reduction in viscosity during molding or in physical properties of the resulting molded article.

The poly(3-hydroxyalkanoate) resin composition for molding may contain substantially no sugar alcohol such as pentaerythritol. The expression "contain substantially no sugar alcohol" is intended to mean that the amount of any sugar alcohol is less than 0.05 parts by weight per 100 parts by weight of the total amount of the P3HA (A) and the poly(3-hydroxybutyrate) resin (C). The amount may be less than 0.01 parts by weight. In an aspect where the resin composition contains substantially no sugar alcohol, bleeding out of any sugar alcohol from the resin composition and the concomitant soiling of production equipment can be avoided. According to the present embodiment, high productivity can be achieved even when the resin composition contains substantially no sugar alcohol serving as a nucleating agent.

### <Lubricant>

The poly(3-hydroxyalkanoate) resin composition for molding may further contain a lubricant. When the resin composition contains a lubricant, the surface smoothness of the resulting molded article can be improved. The lubricant is not limited to a particular type. Preferably, the resin composition contains at least one lubricant selected from the group consisting of behenamide, stearamide, erucamide, and oleamide. When the resin composition contains any of these lubricants, the resulting molded article can have good lubricity (in particular, external lubricity). In terms of improvement in processability and productivity, the resin composition preferably contains behenamide and/or erucamide.

The lubricant used may be behenamide, stearamide, erucamide, oleamide, or a combination of two or more thereof. Alternatively, behenamide, stearamide, erucamide, or oleamide may be used in combination with a lubricant other than them (hereinafter referred to as "other lubricant"). Examples of the other lubricant include, but are not limited to: alkylene fatty acid amides such as methylene bis(stearamide) and ethylene bis(stearamide); polyethylene wax; oxidized polyester wax; glycerin monofatty acid esters such as glycerin monostearate, glycerin monobehenate, and glycerin monolaurate; organic acid monoglycerides such as succinylated monoglycerides of saturated fatty acids; sorbitan fatty acid esters such as sorbitan behenate, sorbitan stearate, and sorbitan laurate; polyglycerin fatty acid esters such as diglycerin stearate, diglycerin laurate, tetraglycerin stearate, tetraglycerin laurate, decaglycerin stearate, and decaglycerin laurate; and higher alcohol fatty acid esters such as stearyl stearate. One such other lubricant may be used alone, or two or more such other lubricants may be used in combination.

The amount of the lubricant (when two or more lubricants are used, the total amount of the lubricants) is not limited to a particular range and may be any amount as long as the lubricant(s) can provide lubricity to the molded article. The (total) amount of the lubricant(s) is preferably from 0.01 to 20 parts by weight, more preferably from 0.05 to 10 parts by weight, even more preferably from 0.5 to 10 parts by weight, still even more preferably from 0.5 to 5 parts by weight, and particularly preferably from 0.7 to 4 parts by weight per 100 parts by weight of the total amount of the P3HA (A) and the poly(3-hydroxybutyrate) resin (C). When the (total) amount of the lubricant(s) is in the above range, the effect of the lubricant(s) can be obtained while avoiding bleeding out of the lubricant(s) to the surface of the molded article.

### <Other Components>

The poly(3-hydroxyalkanoate) resin composition for molding can contain other components such as a plasticizer, an inorganic filler, an antioxidant, an ultraviolet absorber, a colorant such as a dye or pigment, and an antistatic agent, to the extent that the other components do not impair the function of the resulting molded article.

Examples of the plasticizer include, but are not limited to: modified glycerin compounds such as glycerin diacetomonolaurate, glycerin diacetomonocaprylate, and glycerin diacetomonodecanoate; adipic ester compounds such as diethylhexyl adipate, dioctyl adipate, and diisononyl adipate; polyether ester compounds such as polyethylene glycol dibenzoate, polyethylene glycol dicaprylate, and polyethylene glycol diisostearate; benzoic ester compounds; epoxidized soybean oil; 2-ethylhexyl esters of epoxidized fatty acids; and sebacic monoesters. One of these plasticizers may be used alone, or two or more thereof may be used in combination. Among the above plasticizers, the modified glycerin compounds and the polyether ester compounds are preferred in terms of availability and effectiveness. One of these compounds may be used alone, or two or more thereof may be used in combination.

Examples of the inorganic filler include, but are not limited to, clay, synthetic silicon, carbon black, barium sulfate, mica, glass fibers, whiskers, carbon fibers, calcium carbonate, magnesium carbonate, glass powder, metal powder, kaolin, graphite, molybdenum disulfide, and zinc oxide. One of these inorganic fillers may be used alone, or two or more thereof may be used in combination.

Examples of the antioxidant include, but are not limited to, phenol antioxidants, phosphorus antioxidants, and sulfur antioxidants. One of these antioxidants may be used alone, or two or more thereof may be used in combination.

Examples of the ultraviolet absorber include, but are not limited to, benzophenone compounds, benzotriazole compounds, triazine compounds, salicylic acid compounds, cyanoacrylate compounds, and nickel complex salt compounds. One of these ultraviolet absorbers may be used alone, or two or more thereof may be used in combination.

Examples of the colorant such as a pigment or dye include, but are not limited to: inorganic colorants such as titanium oxide, calcium carbonate, chromium oxide, copper suboxide, calcium silicate, iron oxide, carbon black, graphite, titanium yellow, and cobalt blue; soluble azo pigments such as lake red, lithol red, and brilliant carmine; insoluble azo pigments such as dinitroaniline orange and fast yellow; phthalocyanine pigments such as monochlorophthalocyanine blue, polychlorophthalocyanine blue, and polybromophthalocyanine green; condensed polycyclic pigments such as indigo blue, perylene red, isoindolinone yellow, and quinacridone red; and dyes such as Oracet yellow. One of these colorants may be used alone, or two or more thereof may be used in combination.

Examples of the antistatic agent include, but are not limited to: low-molecular-weight antistatic agents such as fatty acid ester compounds, aliphatic ethanolamine compounds, and aliphatic ethanolamide compounds; and high-molecular-weight antistatic agents. One of these antistatic agents may be used alone, or two or more thereof may be used in combination.

The amount of each of the other components described above is not limited to a particular range and may be any amount as long as the effect of the invention can be achieved. The amount of each of the other components can be set as appropriate by those skilled in the art.

### [Method for Producing Poly(3-Hydroxyalkanoate) Resin Composition for Molding]

The poly(3-hydroxyalkanoate) resin composition for molding according to the present embodiment can be produced by a known method. A specific example is a method in which the P3HA (A), the poly(3-hydroxybutyrate) resin (C), and other optional components are melted and kneaded by means such as an extruder, a kneader, a Banbury mixer, or a roll mill. In the melting and kneading, the components are preferably mixed with care so as to avoid a molecular weight loss caused by thermal decomposition. Alternatively, the poly(3-hydroxyalkanoate) resin composition for molding can be produced by dissolving the components in a solvent and then removing the solvent.

In the production by melting and kneading, each of the components may be individually placed into a device such as an extruder, or the components may be mixed first and then the mixture may be placed into a device such as an extruder. When the melting and kneading is performed by an extruder, the resulting poly(3-hydroxyalkanoate) resin composition for molding may be extruded into a strand, and then the strand may be cut into particles of bar shape, cylindrical shape, elliptic cylindrical shape, spherical shape, cubic shape, or rectangular parallelepiped shape.

The resin temperature during the melting and kneading cannot be definitely specified as the resin temperature depends on factors such as the melting point and melt viscosity of the resins used. In terms of achieving high dispersibility while avoiding thermal decomposition of the P3HA (A) and the poly(3-hydroxybutyrate) resin (C), the resin temperature is preferably from 140 to 200°C, more preferably from 150 to 195°C, and even more preferably from 160 to 190°C.

### <Method for Producing Molded Article>

A molded article can be produced from the poly(3-hydroxyalkanoate) resin composition for molding. The molding method is not limited to using a particular technique and may be any method including the process of heating and melting the resin composition and then cooling and solidifying the resin composition. According to the present embodiment, the poly(3-hydroxyalkanoate) resin composition crystallizes at an increased crystallization speed after being melted and exposed to shear; thus, the heating and melting in the molding is preferably carried out under shear flow conditions. In this case, the melt molding using the resin composition can be stably performed at high productivity under practical processing conditions.

The shear rate during the molding cannot be definitely specified as the shear rate depends on factors such as the molding method, the size of the molding machine, and the melting point and melt viscosity of the resins used. In terms of accelerating crystallization by exposure to shear while avoiding thermal decomposition of the P3HA (A) and the poly(3-hydroxybutyrate) resin (C), the shear rate is preferably 10 sec⁻¹ or more, more preferably 30 sec⁻¹ or more, and even more preferably 50 sec⁻¹ or more. The upper limit of the shear rate is not limited to a particular value, and the shear rate may be up to 100,000 sec⁻¹ or up to 500 sec⁻¹.

The resin temperature during the molding cannot be definitely specified as the resin temperature depends on factors such as the melting point and melt viscosity of the resins used. In terms of achieving high dispersibility while avoiding thermal decomposition of the P3HA (A) and the poly(3-hydroxybutyrate) resin (C), the resin temperature is preferably from 140 to 200°C, more preferably from 150 to 195°C, and even more preferably from 160 to 190°C.

The poly(3-hydroxyalkanoate) resin composition for molding or the molded article formed from the composition is suitable for use in various fields such as agricultural industry, fishery industry, forestry industry, horticultural industry, medical industry, hygiene industry, food industry, apparel industry, non-apparel industry, packing industry, automotive industry, building material industry, and other industries.

In the following items, preferred aspects of the present disclosure are listed. The present invention is not limited to the following items.

### [Item 1]

A poly(3-hydroxyalkanoate) resin composition for molding, containing:
a poly(3-hydroxyalkanoate) copolymer (A) having a weight-average molecular weight of 10 × 10⁴ to 100 × 10⁴; and
a poly(3-hydroxybutyrate) resin (C) having a weight-average molecular weight of 16 × 10⁴ to 50 × 10⁴, wherein
the term "weight-average molecular weight" as used herein refers to a polystyrene-equivalent weight-average molecular weight determined by gel permeation chromatography using a chloroform solvent, and
an amount of the poly(3-hydroxybutyrate) resin (C) is from more than 5 to 50 parts by weight per 100 parts by weight of the poly(3-hydroxyalkanoate) copolymer (A).

### [Item 2]

The poly(3-hydroxyalkanoate) resin composition for molding according to item 1, wherein the poly(3-hydroxyalkanoate) copolymer (A) is at least one copolymer selected from the group consisting of poly(3-hydroxybutyrate-co-3-hydroxyvalerate), poly(3-hydroxybutyrate-co-3-hydroxyhexanoate), poly(3-hydroxybutyrate-co-3-hydroxyvalerate-co-3-hydroxyhexanoate), poly(3-hydroxybutyrate-co-4-hydroxybutyrate), poly(3-hydroxybutyrate-co-3-hydroxyoctanoate), and poly(3-hydroxybutyrate-co-3-hydroxydecanoate).

### [Item 3]

The poly(3-hydroxyalkanoate) resin composition for molding according to item 1 or 2, wherein the poly(3-hydroxyalkanoate) copolymer (A) is poly(3-hydroxybutyrate-co-3-hydroxyhexanoate).

### [Item 4]

A molded article containing the poly(3-hydroxyalkanoate) resin composition for molding according to any one of items 1 to 3.

### [Item 5]

The molded article according to item 4, wherein the molded article is produced by melt molding under shear flow at a shear rate of 10 sec⁻¹ or more.

### [Item 6]

A method for producing a molded article, the method including the step of subjecting the poly(3-hydroxyalkanoate) resin composition for molding according to any one of items 1 to 3 to melt molding under shear flow at a shear rate of 10 sec⁻¹ or more.

### Examples

Hereinafter, the present invention will be described more specifically using examples. The present invention is not limited by the examples in any respect. In the examples, the units "parts" and "%" are based on weight.

### <Compounds Used in Examples and Comparative Examples>

### <P3HA (A)>

The following types of poly(3-hydroxybutyrate-co-3-hydroxyhexanoate) (P3HB3HH) (Kaneka Biodegradable Polymer Green Planet^{™} manufactured by Kaneka Corporation) were used as the P3HA (A).
A-1: Powdery P3HB3HH, (3-hydroxybutyrate)/(3-hydroxyhexanoate) = 94.7/5.3 (mol%/mol%), weight-average molecular weight Mw as measured by GPC = 40 × 10⁴
A-2: Powdery P3HB3HH, (3-hydroxybutyrate)/(3-hydroxyhexanoate) = 94.5/5.5 (mol%/mol%), weight-average molecular weight Mw as measured by GPC = 24 × 10⁴

### <P3HB (C)>

The following types of P3HB were used.
C-1: Powdery PHB homopolymer, 3-hydroxybutyrate = 100 (mol%), weight-average molecular weight Mw as measured by GPC = 31 × 10⁴
C-2: Powdery PHB homopolymer, 3-hydroxybutyrate = 100 (mol%), weight-average molecular weight Mw as measured by GPC = 20 × 10⁴
C-3: Powdery PHB homopolymer, 3-hydroxybutyrate = 100 (mol%), weight-average molecular weight Mw as measured by GPC = 9.5 × 10⁴
C-4: Powdery PHB homopolymer, 3-hydroxybutyrate = 100 (mol%), weight-average molecular weight Mw as measured by GPC = 60 × 10⁴

The monomer proportions in P3HB3HH were determined as follows. To about 20 mg of P3HB3HH were added 1 mL of sulfuric acid-methanol mixture (15:85) and 1 mL of chloroform, and the receptacle was tightly closed. The contents of the receptacle were heated at 100°C for 140 minutes to obtain a methyl ester of a P3HB3HH decomposition product. After cooling, 0.5 mL of deionized water was added to the methyl ester. The methyl ester and the deionized water were thoroughly mixed, and the mixture was left until it divided into an aqueous layer and an organic layer. After that, the organic layer was separately collected, and the monomer unit composition of the P3HB3HH decomposition product in the organic layer was analyzed by capillary gas chromatography. The proportion of 3-hydroxyhexanoate was calculated from a peak area obtained by the chromatography.

### <Measurement of Weight-Average Molecular Weight>

The weight-average molecular weight of P3HB3HH or P3HB was measured as follows. First, the resin as a measurement object was dissolved in chloroform, and the solution was heated in a hot water bath at 60°C for 0.5 hours. The heated solution was filtered through a disposable filter made of PTFE and having a pore diameter of 0.45 µm, and the filtrate was then subjected to GPC analysis under the conditions listed below to determine the weight-average molecular weight.
GPC system: High-performance liquid chromatograph 20A system manufactured by Shimadzu Corporation
Columns: K-G 4A (one column) and K-806M (two columns) manufactured by Showa Denko K.K.
Sample concentration: 1 mg/ml
Eluent: Chloroform solution
Eluent flow rate: 1.0 ml/min
Volume of injected sample: 100 µL
Analysis time: 30 minutes
Standard sample: Standard polystyrene

### <Lubricants>

Behenamide ("BNT 22H" manufactured by Nippon Fine Chemical Co., Ltd., which will be hereinafter referred to as "BA") and erucamide ("Neutron S" manufactured by Nippon Fine Chemical Co., Ltd., which will be hereinafter referred to as "EA") were used as lubricants.

The evaluation procedures described below were performed in Examples and Comparative Examples.

### <Evaluation of Torque During Kneading>

Each of the resin compositions obtained in Examples 1 to 6 or Comparative Examples 1 to 6 was melted and kneaded using Xplore series MC5, a small-sized kneader manufactured by DSM, at an extrusion temperature of 170°C and a screw rotational speed of 100 rpm. The maximum torque reached during the melting and kneading was evaluated.

### <Evaluation of Crystallization Behavior Exhibited in Response to Exposure to Shear>

After each of the resin compositions obtained in Examples 1 to 6 or Comparative Examples 1 to 6 was melted and kneaded using Xplore series MC5, a small-sized kneader manufactured by DSM, at an extrusion temperature of 170°C and a screw rotational speed of 100 rpm, the kneaded resin composition was formed into a 200-µm-thick film by hot-pressing the resin composition using a compression molding machine (NSF-50) manufactured by Sinto Metal Industries, Ltd. at a temperature of 160°C and a pressure of 10 MPa. The film was heated, exposed to shear, and cooled. The heating, exposure to shear, and cooling were performed using the conditions listed below and by means of a polarizing microscope (DM2700 P manufactured by Leica) equipped with a heating-shearing stage (CSS450 manufactured by Linkam) provided with parallel plates made of quartz. The resin material cooled to 125°C was observed with a camera mounted on the ocular lens of the microscope every minute for 10 minutes while the resin material was held at 125°C. The time to the onset of crystallization, the crystal morphology, and the occupancy of the field of view by crystals (whether the field of view was occupied entirely or partially) were evaluated. Examples of polarizing microscope images showing the crystal morphology observed with the polarizing microscope are shown in FIG. 1.
Heating temperature: 185°C (increased to 185°C and then held at 185°C for 2 minutes)
Heating rate: 30°C/min
Timing of exposure to shear: Started 90 seconds after 185°C was reached, continued for 30 seconds, and further continued during cooling from 185°C to 125°C.
Shear rate: 100 sec⁻¹
Cooling: Cooled from 185°C to 125°C
Cooling rate: 10°C/min

### <Evaluation of Foreign Substances in Film>

The 200-µm-thick film obtained in the evaluation of crystallization behavior was cut to prepare a 50 mm × 50 mm specimen. The number of foreign substances having a longitudinal length of 10 µm or more in the specimen was counted with the aid of a Peak scale loupe (magnification = × 20) manufactured by Tohkai Sangyo Co., Ltd. The number of the foreign substances was compared to that in a specimen of Comparative Example 1 where a resin composition was prepared without adding the P3HB (C), and ratings were made according to the following criteria.

Good: The number of the foreign substances is not greater than in Comparative Example 1.

Poor: The number of the foreign substances is greater than in Comparative Example 1.

### (Example 1)

An amount of 100 parts by weight of the poly(3-hydroxyalkanoate) copolymer (A-1) was dry-blended with 10 parts by weight of the poly(3-hydroxybutyrate) resin (C-2) and further with 0.5 parts by weight of behenamide (BA) and 0.5 parts by weight of erucamide (EA). The blend was then melted and kneaded, hot-pressed, and subjected to evaluation of crystallization behavior exhibited in response to exposure to shear at a shear rate of 100 sec⁻¹ and evaluation of foreign substances in the film. The melting and kneading, the hot pressing, the crystallization behavior evaluation, and the foreign substance evaluation were performed by the methods as described above. The results are shown in Table 1.

### (Examples 2 and 3)

Poly(3-hydroxyalkanoate) resin compositions for molding were prepared in the same manner as the resin composition of Example 1, except that the amount of the poly(3-hydroxybutyrate) resin (C) was changed as shown in Table 1, and the poly(3-hydroxyalkanoate) resin compositions for molding were subjected to the evaluation of crystallization behavior exhibited in response to exposure to shear at a shear rate of 100 sec⁻¹ and the evaluation of foreign substances in the film. The results are shown in Table 1.

### (Example 4)

A poly(3-hydroxyalkanoate) resin composition for molding was prepared in the same manner as the resin composition of Example 1, except that the poly(3-hydroxyalkanoate) copolymer (C-2) was replaced by the poly(3-hydroxyalkanoate) copolymer (C-1), and the poly(3-hydroxyalkanoate) resin composition for molding was subjected to the evaluation of crystallization behavior exhibited in response to exposure to shear at a shear rate of 100 sec⁻¹ and the evaluation of foreign substances in the film. The results are shown in Table 1.

### (Examples 5 and 6)

Poly(3-hydroxyalkanoate) resin compositions for molding were prepared in the same manner as the resin composition of Example 4, except that the amount of the poly(3-hydroxybutyrate) resin (C) was changed as shown in Table 1, and the poly(3-hydroxyalkanoate) resin compositions for molding were subjected to the evaluation of crystallization behavior exhibited in response to exposure to shear at a shear rate of 100 sec⁻¹ and the evaluation of foreign substances in the film. The results are shown in Table 1.

### (Comparative Examples 1 and 2)

An amount of 100 parts by weight of the poly(3-hydroxyalkanoate) copolymer (A-1) or (A-2) was dry-blended with 0.5 parts by weight of behenamide (BA) and 0.5 parts by weight of erucamide (EA). The blend was then melted and kneaded, hot-pressed, and subjected to evaluation of crystallization behavior exhibited in response to exposure to shear at a shear rate of 100 sec⁻¹ and evaluation of foreign substances in the film. The melting and kneading, the hot pressing, the crystallization behavior evaluation, and the foreign substance evaluation were performed by the methods as described above. The results are shown in Table 1.

### (Comparative Example 3)

An amount of 100 parts by weight of the poly(3-hydroxyalkanoate) copolymer (A-1) was dry-blended with 5 parts by weight of the poly(3-hydroxybutyrate) resin (C-1) and further with 0.5 parts by weight of behenamide (BA) and 0.5 parts by weight of erucamide (EA). The blend was then melted and kneaded, hot-pressed, and subjected to evaluation of crystallization behavior exhibited in response to exposure to shear at a shear rate of 100 sec⁻¹ and evaluation of foreign substances in the film. The melting and kneading, the hot pressing, the crystallization behavior evaluation, and the foreign substance evaluation were performed by the methods as described above. The results are shown in Table 1.

### (Comparative Examples 4 to 6)

Poly(3-hydroxyalkanoate) resin compositions for molding were prepared in the same manner as the resin composition of Comparative Example 3, except that the type of the poly(3-hydroxybutyrate) resin (C) was changed, and the poly(3-hydroxyalkanoate) resin compositions for molding were subjected to the evaluation of crystallization behavior exhibited in response to exposure to shear at a shear rate of 100 sec⁻¹ and the evaluation of foreign substances in the film. The results are shown in Table 1.

**[Table 1]**

| | | Ex. 1 | Ex. 2 | Ex. 3 | Ex. 4 | Ex. 5 | Ex. 6 |
|---|---|---|---|---|---|---|---|
| P3HA (A) [wt%] | A-1 (Mw: 40 × 10%) | 100 | 100 | 100 | 100 | 100 | 100 |
| | A-2 (Mw: 24 × 10%) | | | | | | |
| P3HB (C) [parts by weight] | C-1 (Mw: 31 × 10⁴) | | | | 10 | 15 | 20 |
| | C-2 (Mw: 20 × 10⁴) | 10 | 15 | 20 | | | |
| Lubricant [parts by weight] | BA | 0.5 | 0.5 | 0.5 | 0.5 | 0.5 | 0.5 |
| | EA | 0.5 | 0.5 | 0.5 | 0.5 | 0.5 | 0.5 |
| Torque during kneading | [N] | 772 | 765 | 753 | 820 | 870 | 913 |
| Shear rate | [sec⁻¹] | 100 | 100 | 100 | 100 | 100 | 100 |
| Time to onset of crystallization | [min] | 3 | 3 | 3 | 1 | 1 | 1 |
| Crystal morphology | Spherulite/shish | Shish | Shish | Shish | Shish | Shish | Shish |
| Occupation of field of view by crystals | Entirely/partially | Entirely | Entirely | Entirely | Entirely | Entirely | Entirely |
| Foreign substances in film | | Good | Good | Good | Good | Good | Good |

| | | Comp. 1 | Comp. 2 | Comp. 3 | Comp. 4 | Comp. 5 | Comp. 6 |
|---|---|---|---|---|---|---|---|
| P3HA (A) [wt%] | A-1 (Mw: 40 **×** 10⁴) | 100 | | 100 | 100 | 100 | 100 |
| | A-2 (Mw: 24 × 10⁴) | | 100 | | | | |
| P3HB (C) [parts by weight] | C-1 (Mw: 31 × 10⁴) | | | 5 | | | |
| | C-2 (Mw: 20 × 10⁴) | | | | 5 | | |
| | C-3 (Mw: 9.5 × 10⁴) | | | | | 5 | |
| | C-4 (Mw: 60 × 10⁴) | | | | | | 5 |
| Lubricant [parts by weight] | BA | 0.5 | 0.5 | 0.5 | 0.5 | 0.5 | 0.5 |
| | EA | 0.5 | 0.5 | 0.5 | 0.5 | 0.5 | 0.5 |
| Torque during kneading | [N] | 813 | 413 | 820 | 805 | 793 | 858 |
| Shear rate | [sec⁻¹] | 100 | 100 | 100 | 100 | 100 | 100 |
| Time to onset of crystallization | [min] | 10 | No crystallization | 2 | 3 | No crystallization | 2 |
| Crystal morphology | Spherulite/Shish | Spherulite | No crystallization | Shish | Shish | No crystallization | Shish |
| Occupation of field of view by crystals | Entirely/Partially | Partially | No crystallization | Partially | Partially | No crystallization | Partially |
| Foreign substances in film | | Good | Good | Good | Good | Good | Poor |

Table 1 shows for the poly(3-hydroxyalkanoate) resin compositions for molding of Examples 1 to 6 that the torque during the melting and kneading was not so high and that, despite the heating of the resin compositions to 185°C at which the poly(3-hydroxybutyrate) resin completely melts, the crystallization following exposure to shear at a shear rate of 100 sec⁻¹ was considerably accelerated and a crystalline state called "shish" was observed over the entire field of view. It is also seen that the time to the onset of crystallization was short; the crystallization began after a lapse of 3 minutes or 1 minute. In addition, the number of foreign substances observed in the film was not greater than in Comparative Example 1.

The "shish" is a crystal structure formed as a result of crystallization induced by orientation of the resin molecular chain, i.e., an extended-chain crystal resulting from crystallization occurring with the resin molecular chain extended.

In Comparative Example 1, the time to the onset of crystallization following exposure to shear was as long as 10 minutes. In addition, no "shish" was observed, and spherulites were present only in part of the field of view. In Comparative Examples 2 and 5, crystallization following exposure to shear was never observed. In Comparative Examples 3, 4, and 6, although the crystalline state called "shish" was observed, the "shish" was present only in part of the field of view. Furthermore, in Comparative Example 6, the number of foreign substances in the film was found to be greater than in Comparative Example 1.

The above results reveal that crystallization following exposure to shear is not sufficiently accelerated when the poly(3-hydroxybutyrate) resin (C) is not used as in Comparatives Examples 1 and 2. It is also seen that when the amount of the poly(3-hydroxybutyrate) resin (C) is 5 parts by weight as in Comparative Examples 3 to 6, the accelerating effect on the crystallization following exposure to shear is unsatisfactory and that, in particular, the crystallization following exposure to shear is not accelerated when a poly(3-hydroxybutyrate) resin having a weight-average molecular weight of less than 16 × 10⁴ is used as in Comparative Example 5. Another finding is that when a poly(3-hydroxybutyrate) resin having a weight-average molecular weight of more than 50 × 10⁴ is used as in Comparative Example 6, the number of foreign substances observed in the film increases.

Examples 1 to 6 demonstrate that blending 100 parts by weight of the poly(3-hydroxyalkanoate) copolymer (A) with more than 5 parts by weight of the poly(3-hydroxybutyrate) resin (C) having a weight-average molecular weight of 16 × 10⁴ to 50 × 10⁴ can give a poly(3-hydroxyalkanoate) resin composition that crystallizes in a considerably accelerated fashion after being exposed to shear and can be formed into a molded article with reduced formation of foreign substances.

## Claims

1. A poly(3-hydroxyalkanoate) resin composition for molding, comprising:
a poly(3-hydroxyalkanoate) copolymer (A) having a weight-average molecular weight of 10 × 10⁴ to 100 × 10⁴; and
a poly(3-hydroxybutyrate) resin (C) having a weight-average molecular weight of 16 × 10⁴ to 50 × 10⁴, wherein
the term "weight-average molecular weight" as used herein refers to a polystyrene-equivalent weight-average molecular weight determined by gel permeation chromatography using a chloroform solvent, and
an amount of the poly(3-hydroxybutyrate) resin (C) is from more than 5 to 50 parts by weight per 100 parts by weight of the poly(3-hydroxyalkanoate) copolymer (A).

2. The poly(3-hydroxyalkanoate) resin composition for molding according to claim 1, wherein the poly(3-hydroxyalkanoate) copolymer (A) is at least one copolymer selected from the group consisting of poly(3-hydroxybutyrate-co-3-hydroxyvalerate), poly(3-hydroxybutyrate-co-3-hydroxyhexanoate), poly(3-hydroxybutyrate-co-3-hydroxyvalerate-co-3-hydroxyhexanoate), poly(3-hydroxybutyrate-co-4-hydroxybutyrate), poly(3-hydroxybutyrate-co-3-hydroxyoctanoate), and poly(3-hydroxybutyrate-co-3-hydroxydecanoate).

3. The poly(3-hydroxyalkanoate) resin composition for molding according to claim 1 or 2, wherein the poly(3-hydroxyalkanoate) copolymer (A) is poly(3-hydroxybutyrate-co-3-hydroxyhexanoate).

4. A molded article comprising the poly(3-hydroxyalkanoate) resin composition for molding according to claim 1 or 2.

5. The molded article according to claim 4, wherein the molded article is produced by melt molding under shear flow at a shear rate of 10 sec⁻¹ or more.

6. A method for producing a molded article, the method comprising the step of subjecting the poly(3-hydroxyalkanoate) resin composition for molding according to claim 1 or 2 to melt molding under shear flow at a shear rate of 10 sec⁻¹ or more.
